# EUROPEAN PATENT SPECIFICATION

(11) **EP 2 740 368 B1**
(45) Date of publication and mention of the grant of the patent: **28.09.2016**
(21) Application number: 14000682.6
(22) Date of filing: 26.02.2014
(51) Int. Cl.: A23G 1/18, B01F 7/30

(54) **Chocolate tempering apparatus with planetary mixers**
Vorrichtung mit Planetenrührern zum Temperieren von Schokolade
Appareil de trempe de chocolat avec mélangeurs planétaires

(43) Date of publication of application: 11.06.2014
(73) Proprietor: Aasted ApS, 3520 Farum (DK)
(72) Inventor: Holmud, Dennis, DK-2860 Søborg (DK)
(74) Representative: Heiden, Finn

(56) References cited:
- EP-A1- 0 914 773
- EP-A2- 0 806 148
- EP-A2- 1 050 215
- GB-A- 426 541
- US-A- 2 055 956
- US-A- 2 588 277

## Description

The present invention relates to apparatus for continuous tempering of chocolate mass comprising a column of interconnected, disc-shaped elements comprising mass chambers and intermediary water chambers, a central drive shaft extending through the chambers and in engagement with mixing elements arranged in at least one mass chamber.

The mixing elements of the known tempering apparatus are propels or discs. The propels comprise between two and six plate-shaped blades extending to the inside of the peripheral wall of the chocolate chamber. The outer periphery of the discs leaves a concentric gap to the inside peripheral wall of the chocolate chamber for the chocolate mass to pass through. The propels or discs have a central hub mounted directly onto the shaft, which typically rotates with 25-50 rpm.

The plate-shaped blades and the discs comprise a variety of mixing knobs or obstacles on their upper and lower surfaces for enhancing the flow and mixing of the chocolate mass. However, the radial-velocity of the blades or of the discs are low close to the hub and very high at the outer peripheries. This makes a severe difference in the mixing, scraping and shear capabilities at the center area in comparison with at the peripheral area.

When the mixing and scraping of the chocolate is insufficient in areas, the heat transfer between the water chamber and the chocolate mass is not effective enough in such areas. The temperature through the mass volume is not even. The crystallization in the mass and the mixing up of the created crystals in the mass volume is simply too slow at the centre and not being throughout the mass, as desired. The mass becomes heterogeneous and the quality of the mass is below the standard required. High quality mass requires continuous development of a homogeneous mass volume during tempering.

Especially under certain conditions of tempering, for example when the mass exhibit high viscosity, the friction between the mixing means and the mass becomes very high. Then, the mixing is generally low, especially at the central part of the chambers, and the mass may even be dragged to rotation instead of being mixed thoroughly.

Between the small outer surfaces of the knobs or obstacles and the opposite chamber surfaces are defined so-called shear-gaps. For any point of the rotating mixing blade or sheave, is defined a shear-value or shear-gradient between its surface and the opposite surface of the chocolate chamber. The shear-value is calculated as the velocity of the mixing blade divided by the size of the gap at that particular point. The size of the shear- gap is mostly constant from center and to the periphery, so that the shear-value is rising with the size of the radius towards the periphery. The shear-values for a blade or sheave is in the range between 250 s-1 and 7000 s-1. Typically, the shear-values are tried to be around 500 s-1 near the center and 4000 s-1 at the periphery, when the shaft is set to 35 rpm for the known apparatus. Too low shear-values are not desirable. Neither are too high shear-values, and especially not in the same apparatus. The compromise is to provide a desirable range of shear-values. For example 1500 - 3000 s-1 at the larger part of the chambers. Typically between ¼ and ¾ or more of the radius of the chambers. Outside that range the crystallization is not performing as controlled as desired, which influences the perfect part of the crystallization.

Science has since long agreed, that the actually achieved shear value is a parameter decisive for the type, size and number of crystals created in the shear-gap. As the shear-values achieved during tempering are decisive for the crystallization during the tempering process and consequently the quality of the result, it is important that all parts of the mass passing through the apparatus are exposed to similar conditions of shear and shear-value.

Generally, the chocolate mass encompass all types of suspensions of non-fat particles such as sugar, milk powders and cocoa solids mixed up with a liquid fat constituent, so that the suspensions are capable of crystallizing. When it comes to the most widely used chocolate mass types, the fat constituent comprises genuine cocoa butter typically in a content of up to approximately 35%. However, the fat phase may also comprise substitutes as well. A small content of up to 2-3 % of genuine cocoa butter may still be left in the recipe. Substitutes may be in the form of other types of fat-containing oils such as palm-kernel oil. Chocolate types having the cocoa butter been replaced by other fats are often named commercially as compound chocolate, especially when the cocoa butter has been replaced completely by palm-kernel oil. Mass made of up to 100% cocoa butter may however also be continuously tempered. It is used later on as constituent in the production of different chocolate mass recipes.

For the continuous tempering to be performed, it is decisive, that whether the fat phase constitutes of genuine cocoa butter or substitutes, the fat phase must be capable of crystallizing into stable crystal types when the mass solidifies, such as the βV-crystals developing in genuine cocoa butter. Only then, eatable chocolate articles with good taste, crisp break and shiny appearance are created. The solidified chocolate articles will also achieve the longest possible shelf life and the best resistance against bloom, as instable crystals are diminished. If there is a content of in-stable crystals left in the mass, they will give rise to shorter shelf-life as the articles will bloom more quickly as when in-stable crystals are not present.

The known tempering apparatus could have several different inner configurations as long as it is able to perform continuous tempering of fat-containing chocolate mass. The chocolate channels connecting the chambers could for example be arranged at the periphery of the chocolate chambers or could be arranged as ring-shaped openings through which the shaft extends. An external pump provides a pressure for the flow of chocolate through the chambers of the apparatus. A given size of a tempering machine at the market has a fixed height and consequently fixed areas for cooling, crystallisation and reheating of the mass in the chambers of the particular column. This determines a maximum capacity for continuously tempering of a particular chocolate mass with the machine.

EP 1 050 215 A2 discloses an apparatus for continuous tempering of chocolate mass of the introductory art comprising a column of interconnected, disc-shaped mass chambers and intermediary water chambers and a central drive shaft extending through the chambers. Mixing elements in the form of centrally arranged sheaves in each chamber are fixed directly to the shaft for being rotated therewith. The mixing sheaves are thickest at the center and are decreasing in thickness towards the periphery, so that shear gaps with increasing width towards the periphery of the chambers are present. In the central part of the sheaves are holes for improving mixing of the chocolate.

EP 0 806 148 A2 also discloses an apparatus for continuous tempering of chocolate mass of the introductory art. Mixing elements in the form of centrally arranged propellers having plate shaped arms are fixed to the shaft for rotation therewith. The arms have upper and lower mixing blades as well as holes close to the shaft for improving mixing of chocolate.

EP 0 914 773 A1 discloses another type of tempering apparatus for chocolate having longitudinally extending rolls arranged filling out a long ring-shaped, cylindrical mass chamber between an inner tube and a concentric outer tube. The mass chamber extends uninterrupted from the one end and to the opposite end of the apparatus. An outside shaft is connected with the lower end of the inner tube, so that it is rotated during mixing of the mass when the outer tube is fixed. The rolls could be rotated by frictional engagement with the tubes or the rolls could be rotated by sprocket wheels at their ends engaging with sun gear wheels arranged at the bottom, respective top of the inner tube.

US 2 588 277 A also discloses longitudinally extending rolls arranged in a ring-shaped, temperature conditioning chamber, which is confined between an outer cylinder with jacket, and a co-axial inner cylinder with jacket. The diameter of the rolls correspond to the width of the ring-shaped chamber. At each end of the rolls are teeth forming a planet gear meshing with the rim of ring gear and with a sun gear wheel mounted on a shaft.

According to the present invention, a sun gear wheel is arranged in the mass chamber with its hub engaged on the shaft, an internal ring gear is arranged extending along the inside of the peripheral wall of the mass chamber, and the mixing elements comprise at least one intermediary planet wheel, which meshes with the sun gear wheel and with the internal ring gear, and which planet wheel carries mixing elements.

By rotation of the shaft, the engaged hub and the sun gear wheel is rotated. The meshing engagement of the sun gear wheel with the planet wheel makes the planet wheel rotate as well. As the planet wheel also meshes with the peripheral ring gear, the planet wheel accomplish a circular path in the chamber and is simultaneously being rotated around its own centre. Each mixing element is carried by the planet wheel and performs the same simultaneous pattern of mixing movements in the chocolate mass. The movement along the circular path provides a continuous mixing of the central part of the chambers. The rotation of the mixing elements around their own centres provide an unforeseen effective mixing and scraping of the chocolate in the parts of the chamber distant to the central part, i.e. at the centre of the chamber and at the periphery thereof.

The continuous sweeping of the chamber with mixing elements rotating around their own axis ensures that there are no longer parts of the chambers present, where the mass is not being properly and evenly mixed during tempering. The improved mixing provides a homogenous chocolate mass during tempering, which ensures a perfectly controllable crystallisation and consequently high quality of the tempered mass, which is easily reproducible.

The rotation of the mixing elements along the circular path in the chamber superimposed with the rotation around Its own centre also provide close to constant velocities of the mixing and scraping elements over the chocolate chamber area. In comparison with the prior art exhibiting very large differences in shear-values over the mass chamber area, the inventive improvement is remarkable and the obtained shear values are close to being the same over the chamber surfaces. This provides for crystallisation made under similar conditions all over at the chamber surfaces, which provides for a homogenous mass tempered to high quality. The complete chamber surfaces are now contributing 100% to the process.

The severely improved mixing of the chocolate mass, and the close to constant shear-values all over the areas of the chocolate chambers, together provides a tempering apparatus with a far more effective tempering process than before. Tests have revealed, that the inventive apparatus is capable of producing 3-4 times more high quality chocolate per hour of the same type and recipe as is possible with the prior art apparatus having the same total mass chamber area.

It means, that the inventive tempering apparatus of the same size as the prior art apparatus exhibit a severely improved capacity span of kilograms tempered mass per hour, or vice versa. The inventive tempering apparatus only needs 1/3 of the total cooling chamber surface area of the prior art apparatus for tempering the same amount of chocolate mass per hour. Consequently, the inventive apparatus are made much smaller in size than before. The height of the column are for example reduced to a third of the prior art with the same diameter of the column. If reduced to half height the diameter of the column is also reduced remarkably. The weight of the apparatus is reduced to around half of the prior machines, and handling is made much easier. Most of the auxiliary equipment around the column is also made smaller in size and weight, such as the gearmotor for the shaft.

When the intermediary planet wheel is a gear wheel, the tempering apparatus can run for a high number of hours before service is required. It is easy and simple to connect the mixing elements to the planet gear wheel, and the construction has a few parts. During Its combined movement and rotation around in the chamber the planet gear wheel simply moves with rotation with its teeth through the chocolate mass in the ring gap between the sun gear wheel and the peripheral ring gear, and thereby improves the mixing of the chocolate mass. All chocolate is continuously released from between any of the teeth at the sun gear wheel or at the ring gear.

When the planet wheel is sandwiched in between a lower and an upper mixing element there are provided two effective mixing elements simultaneously performing the same pattern of movement. The lower mixing element mixes up the mass at the lower chamber surface and the upper mixing element at the upper chamber surface. Shear gaps and shear effects are created at both chamber surfaces. During the passage of the mixers over the two respective chamber surfaces, crystals are created in the shear gaps and simultaneously mixed up into the mass.

Furthermore, when the mass chambers of the column are interconnected by ring-shaped channels arranged concentrically around the shaft, the mass is forced to flow along the underside of the sun gear wheel during intensive mixing with all the mass in the lower part of the chamber. Then, the mass is forced to flow through the ring-shaped gap in between the sun gear wheel and the peripheral ring gear under the action of the planet wheel. At the upper part of the mass chamber the mass is mixed through by the passage of the upper mixing elements while it flows in towards the ring-shaped channel at the centre leading to the next chamber in the column. Hereby is achieved an unforeseen effective mixing of the complete mass volume passing through the tempering apparatus. It ensures, that no mass volumes are left without mixing for longer periods than others in the chamber. It is a solution that provides true "first-in-first out" passage of the chocolate mass. When the sun gear wheel and the ring gear extend in between the two mixing elements there is provided further shear gaps for the chocolate mass. Four new shear areas are created. Two further areas are created between the upper sides of the lower mixing element and the lower side of the sun gear wheel and the lower side of the ring gear, respectively. Two more areas are created between the lower sides of the upper mixing element and the upper side of the sun gear wheel and the upper side of the ring gear, respectively. The improvement in shear areas provides for a higher production of tempered chocolate mass.

When the mixing elements has the shape of a star with at least three fingers, the outer ends of the fingers are extending between the shaft and the peripheral wall of the mass chamber. The fingers effectively sweeps and mixes the mass through all parts of the chamber during one rotation of the planet wheel. The provided shear area of the star-shaped mixers are perfectly balanced, not being too big nor too small, and at the same time the fingers provide excellent sweeping and mixing of the mass. The created crystals are effectively removed and mixed up into the mass at a broad range of revolutions of the shaft, such as between 25 and 100 rpm.

According the invention the planet wheel may also comprise axially extending rods arranged on a circle in between two opposite discs, and which rods meshes with the sun gear wheel and with the internal ring gear. During its rotation and combined movement at circle path, the mass is effectively passed in and out between the rods of the planet wheel. The areas of the outer surfaces of the discs are highly effective providing shear effect in the mass due to the superimposed movements of the circle and of the rotations. The discs may be planar providing maximum shear effect or they may be open in the centre as rings for passage of mass there through. The provision of rings makes the chocolate pass through the mixing element during its movement around the chamber. It enhances the mixing up of the crystals created and released from the chamber surfaces. When the mixers have the shape of a sheave the largest possible shear areas or shear-values are obtainable, for example for tempering of low-viscosity mass when required.

The invention is explained further below under reference to preferred embodiments as well as the drawing, in which
fig. 1 is a schematic view of the inventive tempering apparatus,
fig. 2 is a perspective view of a single element from the inventive tempering column comprising both mass chamber and underlying water chamber,
fig. 3 is the same seen in vertical section,
fig. 4 is the same seen from above without mixing elements for clarity,
fig. 5 is a schematic view of the inventive pattern of movement of the planet wheels and mixing elements,
fig. 6 is a schematic view in vertical section of a tempering column with interconnecting channels arranged concentrically around the shaft,
fig. 7 is a schematic view in vertical section of a tempering column with interconnecting channels arranged at the periphery of the chambers,
fig. 8 is a schematic view of another embodiment of the mixing elements each comprising a propel with two blades,
fig. 9 is a perspective view of another embodiment of a single element from the inventive tempering column comprising both mass chamber and underlying water chamber,
fig. 10 is the same embodiment as in figure 9, seen from above, and
fig. 11 is a comparison between the size of a prior art tempering column with two different inventive columns that all have the same maximum tempering capacity.

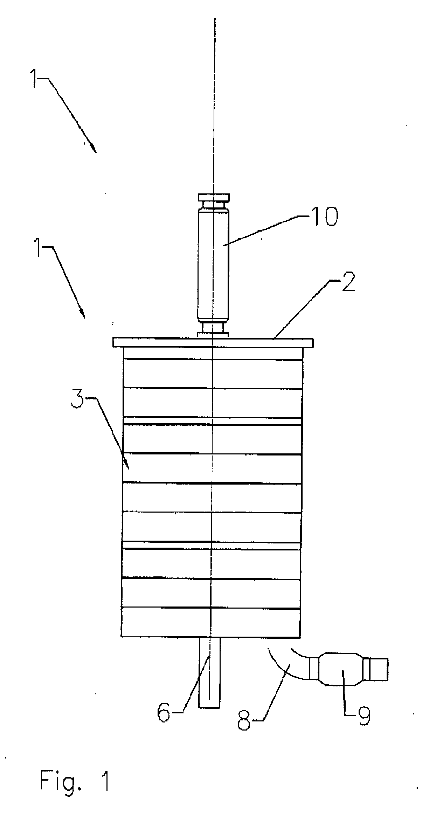

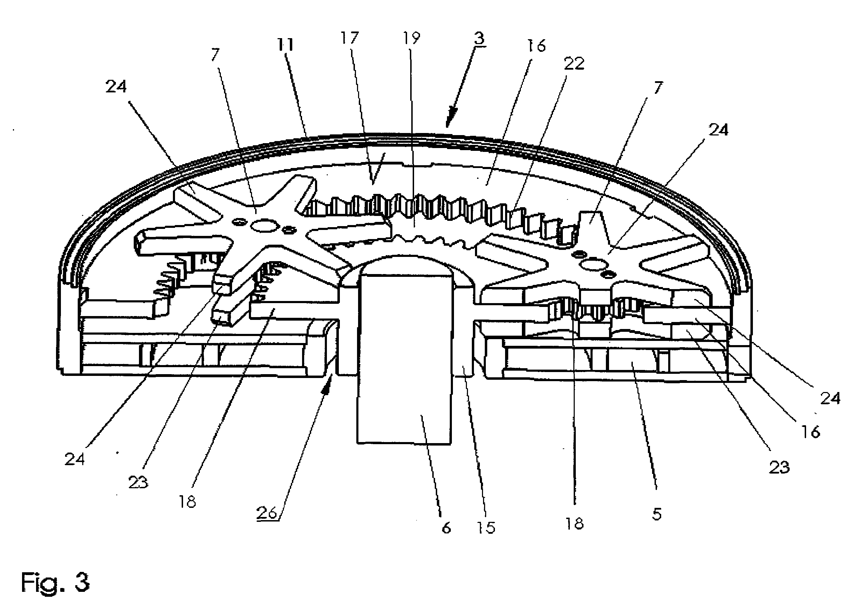

The apparatus 1 for continuous tempering of chocolate mass disclosed in figure 1 comprises a column 2 of disc-shaped elements 3 stacked upon each other. As each element has a mass chamber 4 closed from a lower water chamber 5, such as disclosed in figure 3, the column 2 comprises of a succession of mass chambers 4 and intermediary water chambers 5. A central drive shaft 6 is in engagement with mixing elements 7 arranged in each mass chamber 4.

The column has an inlet 8 and a pump 9 for pumping chocolate mass into the column 2. An outlet 10 for the ready tempered mass leaving the column 2 is connected at the top of the column. The chocolate mass is pumped through the column 2 from bottom towards the top of the column 2. The inlet 8 and the outlet 10 may also be arranged vice versa, so that the chocolate flows through the column 2 from top towards bottom. The column 2 is fixed in a steel frame or support, which is not disclosed as it is not part of the invention.

In the peripheral wall 11 of each element 3 is an inlet opening 12 and an outlet opening 13 for the water circulating through the water chamber 5 during tempering of the chocolate mass. The temperature and flow of the water is controlled in well-known manner by water circuits connected to the inlets 12 and outlets 13 of the chambers 3. The mass is cooled, crystallised and reheated or stabilised passing through the column 2 by the influence of heat-exchange with the particular water circuits.

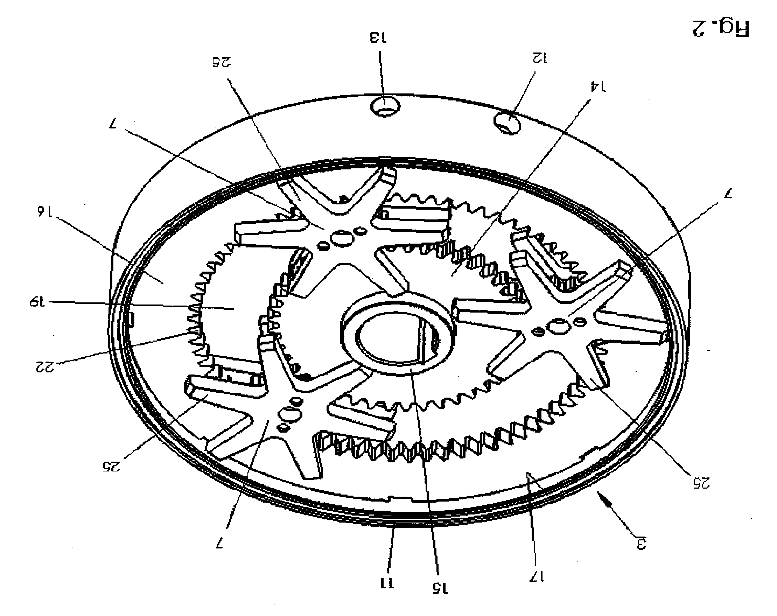

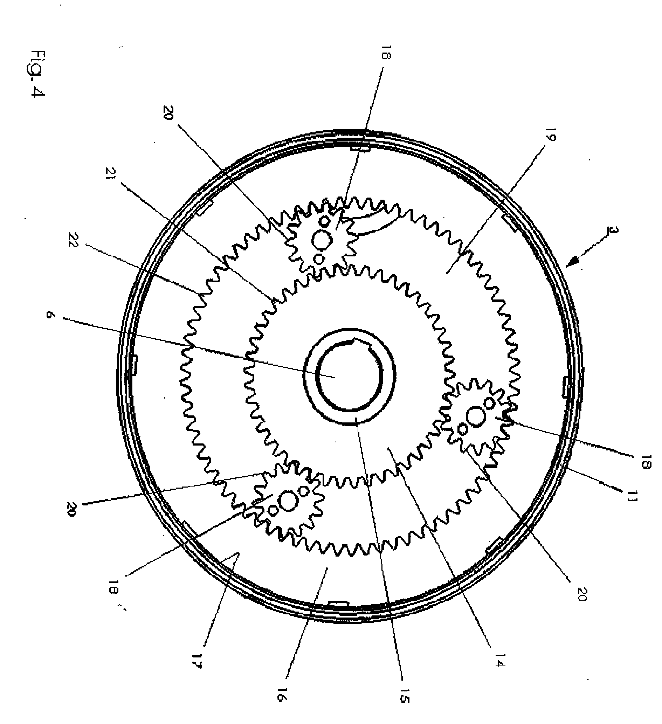

As disclosed in figures 2, 3 and 4 a sun gear wheel 14 Is arranged in the mass chamber 4 with its hub 15 engaged on the shaft 6. An internal ring gear 16 is permanently fixed extending along the inside 17 of the peripheral wall 11 of the mass chamber 4. Three intermediary planet gear wheels 18 are arranged in the circular gap 19 between the sun gear wheel 14 and the ring gear 16. As disclosed in figure 4, the teeth 20 of the planet gear wheels 18 meshes with the teeth 21 of the sun gear wheel 14 and with the teeth 22 of the internal ring gear 16.

At the disclosed embodiment each planet gear wheel 18 is sandwiched in between a lower star-shaped mixing element 23 and an upper star-shaped mixing element 24, referring to figures 2 and 3. Each of the star-shaped mixing elements has six fingers 25, which extends as close as possible to the inside 17 of the peripheral chamber wall 11 as well as to the central hub 15 of the sun gear wheel 14 during rotation.

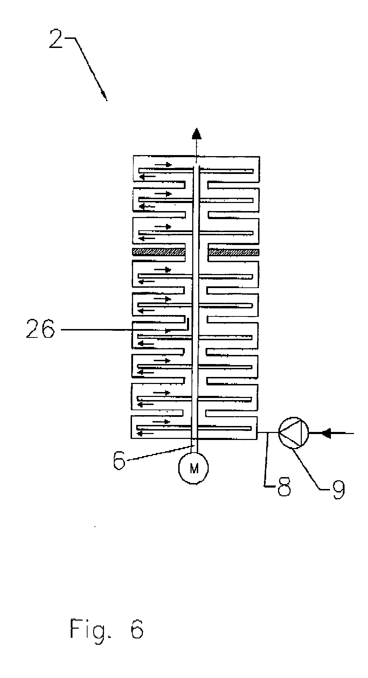

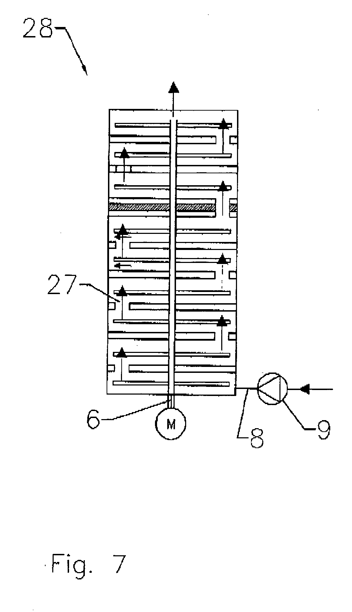

The mass passes into the chambers 4 via ring-shaped openings 26 arranged around the shaft 6 and the hub 15 of the sun gear wheel 14 at the embodiment of figures 2 and 3. This principle for mass flow through the column 2 is disclosed schematically in figure 6. The chocolate openings may also be arranged as peripheral openings 27 in the column 28, as schematically disclosed in figure 7.

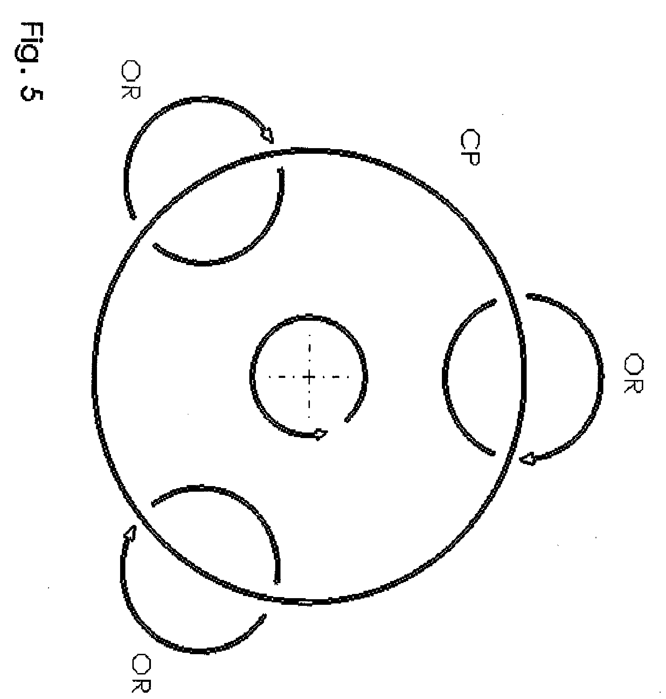

By rotation of the shaft 6, the engaged hub 15 and the sun gear wheel 14 are rotated. The meshing engagement of the sun gear wheel 14 with the planet gear wheels 18 makes the planet wheels rotate in the opposite direction. As the planet gear wheels 18 also meshes with the peripheral ring gear 16, the planet gear wheels 18 accomplish a circular path CP in the chambers 4 and are simultaneously rotated in an orbital rotation OR as disclosed schematically in figure 5.

At the disclosed embodiment the exchange between the sun gear wheel 14 and the planet gear wheels 18 is 3,21 : 1. The exchange between the planet gear wheel 18 and the ring gear 16 is 1: 5,21. For each 1,62 revolutions of the shaft 6 the planet gear wheels 18 have completed a full circle path CP through the chambers 4. When the shaft rotates with 50 rpm the planet gear wheels 18 and consequently the star-shaped mixers 23, 24 simultaneously rotate OR with 160,5 rpm, i.e. figure 5. These settings have found to be advantageous for high quality tempering of standard chocolate recipes of dark and milk chocolate. By lowering or rising the revolutions per minute of the shaft the mixing and shear intensity can be adapted to the requirements. The exchange relations between planet gear wheels and sun gear wheel and ring gear, respectively are easily changed if needed for tempering of masses with different types if required.

Each star-shaped mixing element 24, 25 is carried by a planet wheel 18 and performs the same simultaneous pattern of mixing movements in the chocolate mass. The movement along the circular path CP provides a continuous mixing of the central part of the chambers 4. The rotation OR of the star-shaped mixing elements 24, 25 provide an unforeseen effective mixing of the chocolate mass simultaneously in all the parts of the chamber 4. The lower mixing element 23 mixes through the mass in the lower part of the chamber 4, and the upper mixing element 24 mixes through the mass in the upper part of the chamber 4.

As the sun gear wheel 14 and the ring gear 16 extend in between the two mixing elements 23, 24 there is provided further shear gaps between the mixing elements 23, 24 and the sandwiched surfaces of the sun gear wheel 14 and the ring gear 16, respectively. The enlarged shear areas provide for higher capacity of producing tempered chocolate mass in an apparatus of the same size.

When entering the chambers 4 through the ring-shaped openings 26, the mass Is forced to flow along the underside of the sun gear wheel 14 during intensive mixing with all the mass In the lower part of the chamber 4. Then, the mass is forced to flow through the ring-shaped gap 19 in between the sun gearwheel 14 and the peripheral ring gear 19 under the action of the star-shaped mixers 23, 24. At the upper part of the mass chamber the mass is mixed through by the passage of the upper mixing elements 24 while it flows in towards the ring-shaped channel 15 at the centre leading to the next chamber 4 in the column 2. Hereby is achieved an unforeseen effective mixing of the complete mass volume passing through the tempering apparatus. It ensures, that no mass volumes are left without mixing for longer periods than others in the chamber. It is a solution that provides true "first-in - first out" passage of the chocolate mass through the tempering apparatus.

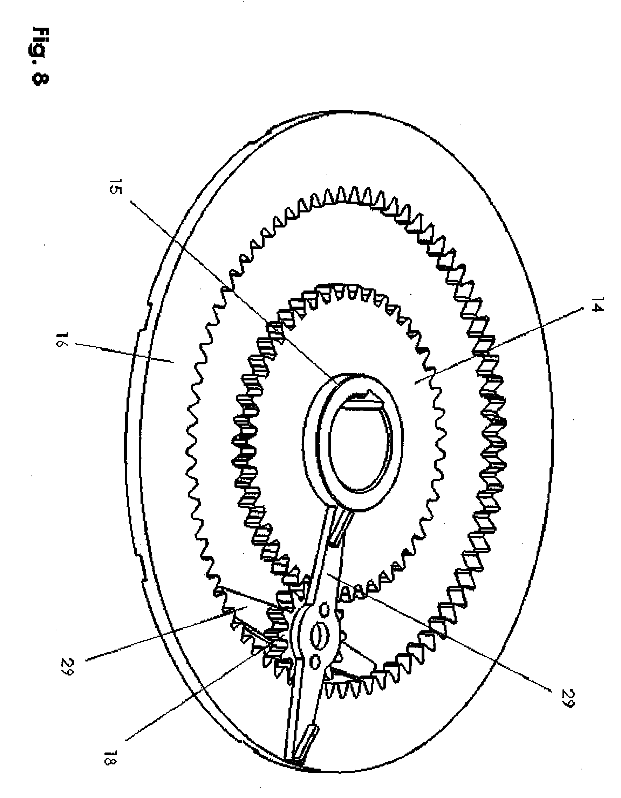

The mixing elements may have many different embodiments as long as they are carried by planet wheels according to the inventive solution. In figure 8 is for example disclosed another embodiment of the mixing elements as two-armed mixing blades 29.

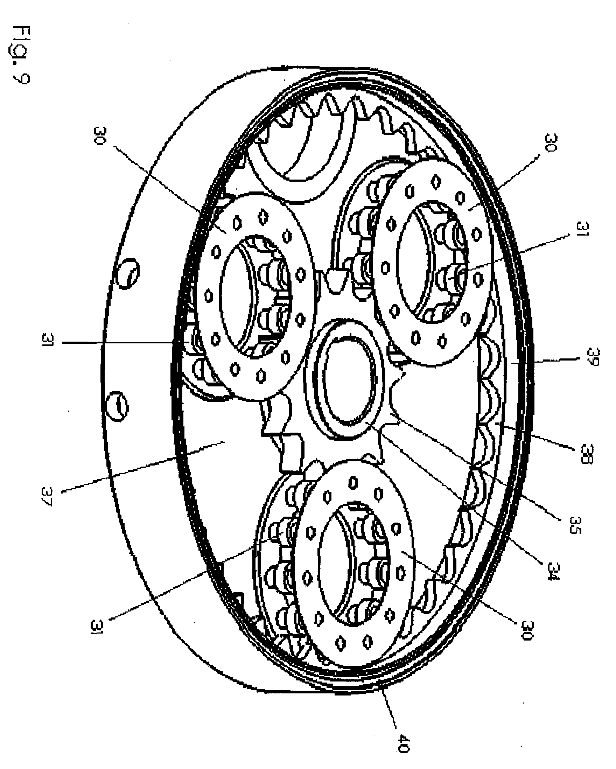

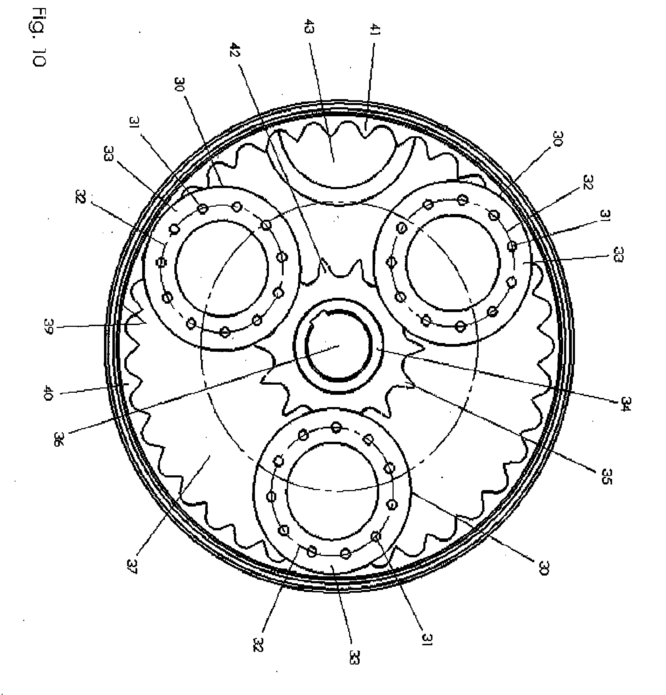

In figure 9 and 10 is disclosed another embodiment of the invention where the planet wheels 30 comprise axially extending rods 31 arranged on a circle 32 in between two opposite discs or sheaves 33. The hub 34 of a central sun gear wheel 35 is engaged with the shaft 36, that entends through all the chocolate chambers 37. An internal ring gear 38 is arranged at the inside 39 of the peripheral wall 40 of the chocolate chamber 37.

The openings 41 for the chocolate mass to enter and leave the chambers 37 are arranged at the periphery as depicted in figure 7, however they can also be arranged as in figure 6.

When the shaft 36 is rotated the teeth 42 of the sun gear wheel 35 engage with the rods 31, which also engage with the teeth 43 of the internal ring gear 38. The sheaves 33 of the planet wheels 30 then perform the combined rotation OR and movement along the circular path CP as in figure 5. When performing such advantageous mixing pattern through the chamber 37, the mass is effectively passed in and out between the rods 31 of the planet wheels 30. The areas of the mixing sheaves 33 are highly effective providing shear effect in the mass due to the superimposed rotations along the circular path. The discs may be planar providing maximum shear effect or they may be open in the centre as rings for passage of mass there through. The provision of sheaves or discs with a center hole 44 makes the chocolate pass through the mixing element during its movement around the chamber. It enhances the mixing up of the crystals created and released from the chamber surfaces. When the mixers have the shape of a disc the largest possible shear areas or shear-values are obtainable, for example for tempering of low-viscosity mass when required.

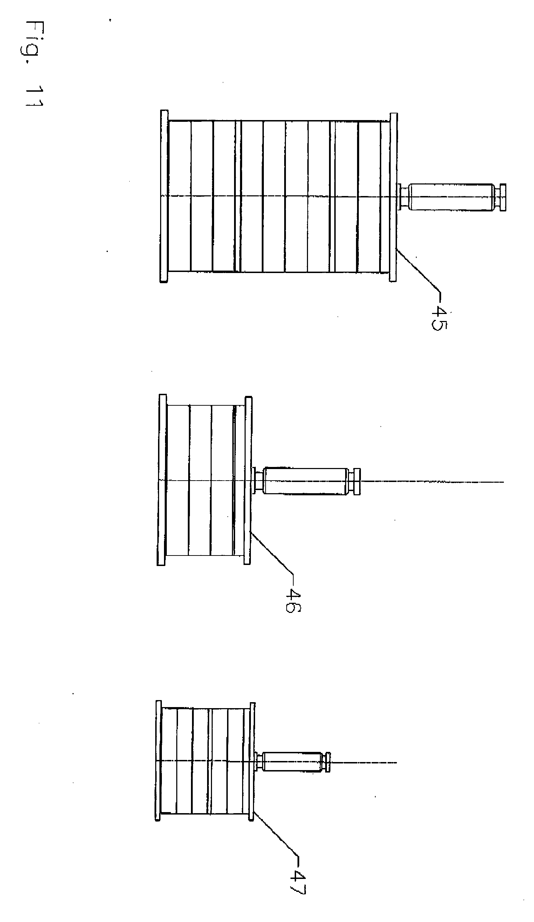

In figure 11 is disclosed a prior art tempering column 45 and two different tempering columns 46 and 47 both comprising the inventive solution according to figures 2-5. All three tempering columns have a maximum tempering capacity of 2000 kg chocolate mass per hour of the same chocolate type.

Tests have revealed, that the inventive apparatus is capable of producing 3-4 times more high quality chocolate per hour of the same type and recipe as is possible with the prior art apparatus having the same total mass chamber area.

It means, that the inventive tempering apparatus of the same size as the prior art apparatus exhibit a severely improved capacity span of kilograms tempered mass per hour. Or vice versa. The inventive tempering apparatus needs only 1/3 of the total cooling chamber surface area of the prior art apparatus for tempering the same amount of chocolate mass per hour. Consequently, the inventive apparatus 46,47 are made much smaller in size than before. The height of the column 46 is for example reduced to a third of the prior art column 45 with the same diameter.

The novel column 47 has reduced to half height of the prior art column 45 and the diameter of the column 47 is also reduced remarkably. The weight of the inventive apparatus 48, 47 is reduced to around half of the prior machines 45, and handling is made much easier. Most of the auxiliary equipment around the column is also made smaller in size and weight, such as the gearmotor for the shaft.

Many different shapes and forms of the mixing elements are possible, as long as the inventive solution of planet wheels carrying the mixing elements and their advantageous path through the mass chambers are preserved. The number of the planet wheels carrying mixing elements in a mass can also be altered and adopted to the particular requirements. For example may two planet mixers be sufficient in chambers tempering high-viscosity or heavy-duty mass. In mass chambers tempering low viscosity mass such as highly liquid cocoa butter a higher number of planetary mixers, such as four per chamber can be more effective.
- 1:: apparatus for continuous tempering
- 2:: tempering column
- 3:: disc-shaped element
- 4:: mass chamber
- 5:: water chamber
- 6:: drive shaft
- 7:: mixing element
- 8:: chocolate inlet
- 9:: chocolate pump
- 10:: chocolate outlet
- 11:: peripheral wall of mass chamber
- 12:: water inlet opening
- 13:: water outlet opening
- 14:: sun gear wheel
- 15:: gear wheel hub
- 16:: internal ring gear
- 17:: inside of wall
- 18:: planet gear wheel
- 19:: circular gap
- 20:: teeth of planet gear wheel
- 21:: teeth of sun gear wheel
- 22:: teeth of ring gear
- 23:: lower star-shaped mixing element
- 24:: upper star-shaped mixing element
- 25:: fingers of mixing element
- 26:: ring-shaped opening
- 27:: peripheral opening
- 28:: column
- 29:: two-armed mixing blades
- 30:: planet wheel
- 31:: axial rods
- 32:: circle of rods
- 33:: sheaves
- 34:: hub
- 35:: sun gear wheel
- 36:: shaft
- 37:: chocolate chamber
- 38:: ring gear
- 39:: inside of peripheral wall
- 40:: peripheral wall
- 41:: opening for chocolate at periphery
- 42:: teeth of sun gear wheel
- 43:: teeth of internal ring gear
- 44:: center hole
- 45:: prior art tempering column
- 46:: inventive tempering column
- 47:: inventive tempering column

## Claims

1. Apparatus (1) for continuous tempering of chocolate mass comprising a column (2) of disc-shaped elements comprising
mass chambers (4, 37) and intermediary water chambers (5), a central drive shaft (6, 36) extending through the chambers and in engagement with mixing elements (7, 23, 24, 31, 33) arranged in at least one mass chamber (4, 37),
**characterized in,**
**that** a sun gear wheel (14, 35) is arranged in the mass chamber with its hub (15, 34) engaged on the shaft (6, 36),
**that** an internal ring gear (16, 38) is arranged extending along the inside (17, 39) of the peripheral wall (11, 40) of the mass chamber (4, 37), and
**that** the mixing elements (7, 23, 24, 30) comprise at least one intermediary planet wheel (18, 30), which meshes with the sun gear wheel (14, 35) and with the internal ring gear (16, 38), and which planet wheel (18, 30) carries mixing elements (7, 23, 24,31,33).

2. Apparatus according to claim 1, **characterized in, that** the intermediary planet wheel is a gear wheel (18).

3. Apparatus according to claim 1, **characterized in, that** the planet wheel (18) is sandwiched in between a lower and an upper mixing element (23, 24).

4. Apparatus according to claim 3, **characterized in, that** the sun gear wheel (14) and the ring gear (16) extend in between the upper and lower mixing elements (23, 24).

5. Apparatus according to claim 1, **characterized in, that** the mixing elements have the shape of a star (23, 24) with at least three fingers (25), which are extending to the hub (15) of the sun gear wheel (14) as well as to the inside (17) of a peripheral wall (11) of the mass chamber (4).

6. Apparatus according to claim 1, **characterized in, that** the planet wheel (30) comprises axially extending rods (31) arranged on a circle (32) in between two opposite discs (33), and which rods (31) meshes with the sun gearwheel (35) and with the internal ring gear (38).

7. Apparatus according to claim 6, **characterized in, that** the opposite disks have the shape of a sheave (33) comprising at least one opening (44) for passage of mass.

## Patentansprüche

1. Vorrichtung (1) zum kontinuierlichen Temperieren von Schokoladenmasse, umfassend eine Säule (2) aus scheibenförmigen Elementen, umfassend Massenkammern (4, 37) und dazwischenliegende Wasserkammern (5), eine zentrale Antriebswelle (6, 36), die sich durch die Kammern erstreckt und mit Mischelementen (7, 23, 24, 31, 33) in Eingriff steht, die in wenigstens einer Massenkammer (4, 37) angeordnet sind, **dadurch gekennzeichnet, dass**
ein Sonnenrad (14, 35) in der Massenkammer angeordnet ist, wobei seine Nabe (15, 34) mit der Welle (6, 36) in Eingriff steht,
ein interner Zahnkranz (16, 38) so angeordnet ist, dass er sich entlang der Innenseite (17, 39) der Umfangswand (11, 40) der Massenkammer (4, 37) erstreckt, und
die Mischelemente (7, 23, 24, 30) wenigstens ein intermediäres Planetenrad (18, 30) umfassen, das mit dem Sonnenrad (14, 35) und mit dem internen Zahnkranz (16, 38) verzahnt ist, und wobei das Planetenrad (18, 30) Mischelemente (7, 23, 24, 31, 33) trägt.

2. Vorrichtung nach Anspruch 1, **dadurch gekennzeichnet, dass** das intermediäre Planetenrad ein Zahnrad (18) ist.

3. Vorrichtung nach Anspruch 1, **dadurch gekennzeichnet, dass** das Planetenrad (18) zwischen einem unteren und einem oberen Mischelement (23, 24) eingelegt ist.

4. Vorrichtung nach Anspruch 3, **dadurch gekennzeichnet, dass** sich das Sonnenrad (14) und der Zahnkranz (16) zwischen den oberen und unteren Mischelementen (23, 24) erstrecken.

5. Vorrichtung nach Anspruch 1, **dadurch gekennzeichnet, dass** die Mischelemente die Form eines Sterns (23, 24) mit wenigstens drei Fingern (25) aufweisen, die sich zur Nabe (15) des Sonnenrads (14) und zur Innenseite (17) einer Umfangswand (11) der Massenkammer (4) erstrecken.

6. Vorrichtung nach Anspruch 1, **dadurch gekennzeichnet, dass** das Planetenrad (30) sich axial erstreckende Stäbe (31) umfasst, die auf einem Kreis (32) zwischen zwei gegenüberliegenden Scheiben (33) angeordnet sind, und wobei die Stäbe (31) mit dem Sonnenrad (35) und dem internen Zahnkranz (38) verzahnt sind.

7. Vorrichtung nach Anspruch 6, **dadurch gekennzeichnet, dass** die gegenüberliegenden Scheiben die Form einer Rillenscheibe (33) aufweisen, die wenigstens eine Öffnung (44) zum Durchführen von Masse umfasst.

## Revendications

1. Appareil (1) de conditionnement en continu de masse de chocolat, comprenant une colonne (2) d'éléments en forme de disque comprenant des chambres de masse (4, 37) et des chambres d'eau intermédiaires (5), un arbre d'entraînement central (6, 36) s'étendant à travers les chambres et en prise avec des éléments de mélange (7, 23, 24, 31, 33) agencés dans au moins une chambre de masse (4, 37), **caractérisé**
**en ce qu'**une roue solaire (14, 35) est disposée dans la chambre de masse, avec son moyeu (15, 34) en prise sur l'arbre (6, 36),
**en ce qu'**une couronne dentée interne (16, 38) est agencée de manière à s'étendre le long de l'intérieur (17, 39) de la paroi périphérique (11, 40) de la chambre de masse (4, 37), et
**en ce que** les éléments de mélange (7, 23, 24, 30) comprennent au moins une roue planétaire intermédiaire (18, 30) qui s'engrène avec la roue solaire (14, 35) et avec la couronne dentée interne (16, 38) et laquelle roue planétaire (18, 30) porte les éléments de mélange (7, 23, 24, 31, 33).

2. Appareil selon la revendication 1, **caractérisé en ce que** la roue planétaire intermédiaire est une roue d'engrenage (18).

3. Appareil selon la revendication 1, **caractérisé en ce que** la roue planétaire (18) est prise en sandwich entre un élément de mélange inférieur et un élément de mélange supérieur (23, 24).

4. Appareil selon la revendication 3, **caractérisé en ce que** la roue solaire (14) et la couronne dentée (16) s'étendent entre les éléments de mélange supérieur et inférieur (23, 24).

5. Appareil selon la revendication 1, **caractérisé en ce que** les éléments de mélange ont la forme d'une étoile (23, 24) ayant au moins trois branches (25), qui s'étendent jusqu'au moyeu (15) de la roue solaire (14) ainsi que jusqu'à l'intérieur (17) d'une paroi périphérique (11) de la chambre de masse (4).

6. Appareil selon la revendication 1, **caractérisé en ce que** la roue planétaire (30) comprend des tiges s'étendant axialement (31) agencées sur un cercle (32) entre deux disques opposés (33), lesquelles tiges (31) s'engrènent avec la roue solaire (35) et avec la couronne dentée interne (38).

7. Appareil selon la revendication 6, **caractérisé en ce que** les disques opposés ont la forme d'une poulie (33) comprenant au moins une ouverture (44) pour le passage de la masse.
